# EUROPÄISCHE PATENTSCHRIFT

(11) **EP 2 226 273 B1**
(45) Veröffentlichungstag und Bekanntmachung des Hinweises auf die Patenterteilung: **25.07.2018**
(21) Anmeldenummer: 10152752.1
(22) Anmeldetag: 05.02.2010
(51) Int. Cl.: B65G 1/137, B65G 47/08, B65G 57/24, B65G 61/00, B65G 60/00

(54) **System, Verfahren und Bedieneinheit zum Erstellen von gemischten Lagen für Paletten**
System, method and operating unit for producing mixed layers for pallets
Système, procédé et unité de commande pour l'assemblage de couches de palettes mixtes

(30) Priorität: 04.03.2009 DE 102009003564
(43) Veröffentlichungstag der Anmeldung: 08.09.2010
(73) Patentinhaber: Krones AG, 93073 Neutraubling (DE)
(72) Erfinder: Beck, Michael, 93073 Neutraubling (DE); Ludsteck, Markus, 93073 Neutraubling (DE)
(74) Vertreter: Reichert & Lindner Partnerschaft Patentanwälte

(56) Entgegenhaltungen:
- EP-A1- 0 592 263
- EP-A1- 1 223 121
- EP-A2- 0 396 960
- WO-A1-2009/019164
- DE-A1- 19 947 167
- DE-U1-202005 019 906
- JP-A- 2003 002 436
- JP-A- 2005 145 578
- US-A- 4 692 876
- US-A1- 2005 246 056

## Beschreibung

Die vorliegende Erfindung betrifft ein System zum Erstellen von gemischten Lagen für Paletten. Im Besonderen umfasst das System ein Lager, in dem mindestens zwei unterschiedliche Gebindetypen auf mehrere Paletten aus mehreren Lagen von sortenreinen Gebinden gelagert sind. Ferner ist ein Depalettierer vorgesehen, der zum Abnehmen jeweils einer sortenreinen Lage von der sortenreinen Palette dient. Mehrere einzelne Bänder sind parallel angeordnet, wobei jedes Band die vereinzelten Gebinde einer jeden sortenreinen Lage eines Gebindetyps aufnimmt und speichert.
Ferner betrifft die Erfindung ein Verfahren zum Erstellen von gemischten Lagen für Paletten.

Ebenso wird eine Bedieneinheit für ein System zum Erstellen von gemischten Lagen für Paletten offenbart. Der Bedieneinheit ist es möglich, das System derart zu steuern, dass eine Palette aus mindestens zwei Gebindetypen in Form von gemischten Lagen erstellt werden kann. Die unterschiedlichen Gebindetypen besitzen gleiche Dimensionen. Das Dokument US 2007/0280814 A1 offenbart ein System und ein Verfahren zum Erstellen von gemischten Lagen für Paletten. Die gemischten Lagen für Paletten werden dabei aus mindestens einer sortenreinen Lage einer Palette erstellt. Mit einem Zuführsystem werden die vollen sortenreinen Lagen einer Palette dem System zugeführt. Ferner sind eine Vielzahl von Bahnen vorgesehen, in denen die einzelnen Gebinde sortenrein für die Palettierung zwischengespeichert werden können. Zentral zu den Bahnen, die für die Speicherung der sortenreinen Gebindetypen vorgesehen sind, ist ein Roboter angeordnet, der die einzelnen Gebinde aufnimmt und daraus eine gemischte Lage für die Palettierung auf einer Palette bildet.

EP 17 752 42 A1 offenbart ein Verfahren zur Palettierung. Mit dem Verfahren können Paletten erstellt werden, die unterschiedliche Gebinde umfassen. Die auf der Palette angeordneten Gebinde können unterschiedliche Dimensionen besitzen.

DE 602 004 004 205 T2 offenbart ein automatisches System zum Sortieren und Palettieren von Artikeln. Mit dem vorgeschlagenen Verfahren sollen vor allem leichte Artikel mit geringerer Stabilität verarbeitet werden. Eine typische Anwendung dieser Vorrichtung richtet sich auf Artikel, die aus Packungen aus zwei oder mehr Papierrollen, die in eine Kunststofffolie eingewickelt sind, bestehen. Bei bestimmten Systemen werden die Artikel (beispielsweise die besagten Papierrollenpackungen) zunächst in "Gruppen" angeordnet, die dann zu einer Schicht aus Artikeln mit einer vorbestimmten geometrischen Plankonfiguration angeordnet werden. Diese Schichten werden schließlich zu einem Stapel übereinander gestapelt.

Die deutsche Offenlegungsschrift DE 196 09 959 A1 betrifft einen Palettierer. Die zu Einheiten verpackten Gegenstände werden mit entsprechenden Mitteln derart orientiert, dass die Einheiten in gewünschter Ausrichtung zueinander auf eine Palette gefördert werden können. Dabei ist der Druckteller über ein Distanzstück mit der ersten Hubvorrichtung verbunden und die erste Hubvorrichtung ist seitlich gegenüber dem Schieber bzw. dem Druckteller versetzt. Der Schieber ist an einer zweiten Hubvorrichtung angeordnet und die zweite Hubvorrichtung weist einen senkrecht verfahrbaren Träger auf, an dessen Ende der Schieber befestigt ist, wobei der Träger ebenfalls vom Druckteller versetzt, jedoch der ersten Hubvorrichtung gegenüberliegend angeordnet ist.

EP 0 396 960 A2 offenbart ein System (Anlage) zum Erstellen von gemischten Lagen nach den Oberbegriff des Anspruchs 1 für Paletten mit mehreren Depalettierern (Depalettierungsstationen) zum Abnehmen jeweils einer sortenreinen Lage. Die sortenreinen Paletten werden den mehreren Depalettierungsstationen direkt zugeführt. Die Gegenstände werden in Sortenspeichern gespeichert, die als Etagenspeicher oberhalb der Sortenfördermittel (parallele Bänder) angeordnet sind. Den parallelen Bändern ist ebenfalls mindestens ein Zuführband (Gruppenfördermittel) für einen Gruppiertisch (Gruppenbildungsstationen mit Paletten- bzw. Gruppenbildungsbereich für die zu gruppierenden Gegenstände) nachgeschaltet. Es ist auch eine Steuerung vorgesehen.

Aufgabe der Erfindung ist, ein System zum Erstellen von gemischten Lagen für Paletten zu schaffen, wobei eine definierte Aussage darüber getroffen werden kann, an welcher Position innerhalb der Palette bzw. innerhalb einer Lage auf der Palette aus gemischten Gebindetypen sich die entsprechenden Gebindetypen befinden.

Diese Aufgabe wird gelöst durch ein System, dass die Merkmale des Anspruchs 1 umfasst.

Eine weitere Aufgabe der Erfindung ist, ein Verfahren zu schaffen, mit dem gemischte Lagen für Produktionspaletten erstellt werden können, wobei eine definierte Position der verschiedenen Gebindetypen innerhalb der Paletten bzw. innerhalb der Lage einer Palette festgelegt werden kann.

Diese Aufgabe wird gelöst durch ein Verfahren, das die Merkmale des Anspruchs 7 umfasst.

Das System zum Erstellen von gemischten Lagen für Paletten besitzt zumindest ein Lager, in dem mindestens zwei unterschiedliche Gebindetypen auf mehreren Paletten gelagert werden. In einer bevorzugten Ausführungsform sind in dem Lager mindestens vier unterschiedliche Gebindetypen jeweils sortenrein auf den Paletten zwischengelagert. Dem Lager selbst ist ein Depalettierer zugeordnet, der zum lagenweisen und sortenreinen Abnehmen jeweils einer Lage von einer Palette ausgebildet ist. Die von der jeweiligen Palette abgenommene sortenreine Lage wird in die einzelnen Gebinde vereinzelt. Die einzelnen sortenreinen Gebinde werden jeweils einem Band zur Zwischenspeicherung zugeführt. In der erfindungsgemäßen Vorrichtung sind hierzu mehrere parallele Bänder vorgesehen, wobei jedes Band die vereinzelten Gebinde der sortenreinen Lage eines Gebindetyps aufnimmt und speichert. Den mehreren parallelen Bändern ist dabei mindestens ein Zuführband für einen Gruppiertisch nachgeschaltet. Das System ist mit einer Steuerung versehen, so dass die einzelnen unterschiedlichen Gebindetypen in Abhängigkeit von den vordefinierten Positionen der unterschiedlichen Gebindetypen in einem Lagenbild einer Lage einer Produktionspalette dem Gruppiertisch über das Zuführband zuführbar sind. Der Gruppiertisch ist dabei derart ausgebildet, dass anhand der vordefinierten Positionen der unterschiedlichen Gebindetypen innerhalb einer gemischten Lage einer Produktionspalette die Gebindetypen positioniert werden.

Im Gruppiertisch ist ein Palettierer nachgeschaltet, der die gemischte Lage aus den mindestens zwei Gebindetypen auf der Produktionspalette absetzt. Die vordefinierten Positionen der unterschiedlichen Gebindetypen im Lagenbild einer Lage der Produktionspalette sind entsprechend einem prozentualen Anteil der mindestens zwei Gebindetypen der Produktionspalette verteilt.

Die unterschiedlichen Gebindetypen der auf der Produktionspalette abgesetzten Gebinde haben die gleiche Größe.

Die Steuerung des Systems ist mit einem Touch-Panel versehen. Über das Touch-Panel kann ein Bediener Zustandsinformationen vom System erhalten und die Positionierung der unterschiedlichen Gebindetypen innerhalb der Lage aus unterschiedlichen Gebinden vorgeben. Obwohl sich die nachfolgende Beschreibung auf ein Touch-Panel als Ein-/Ausgabe-Einheit bezieht, soll dies nicht als eine Beschränkung der Erfindung aufgefasst werden. Die Ein-/Ausgabe-Einheit kann ferner als ein Display mit einem Eingabesystem ausgestattet sein. Das Eingabesystem kann zum Beispiel eine Tastatur oder eine Computermaus oder ein Joystick oder eine Spracheingabeeinheit sein. Erfindungsgemäß ist eine Bildverarbeitungseinrichtung im System angeordnet, die die einzelnen Gebinde auf Beschädigungen hin und/oder zum jeweiligen Produktionsauftrag gehörig und/oder auf den in Abhängigkeit von den Positionen der unterschiedlichen Gebindetypen im Lagenbild der Lage einer Produktionspalette sequentiell richtigen Transport hin überprüft.

Dabei ist eine Bildverarbeitungseinrichtung dem Depalettierer zugeordnet, um die für den Auftrag erforderlichen Gebindetypen zu verifizieren. Ferner ist eine Bildverarbeitungseinrichtung in dem Bereich angeordnet, an dem die vereinzelten Gebinde der sortenreinen Lage eines Gebindetyps in die einzelnen Bänder laufen.

Ebenso ist eine Bildverarbeitungseinrichtung dem Zuführband zum Gruppiertisch zugeordnet, um die gemäß dem Lagenbild einer Lage einer Produktionspalette aus den mehreren Bändern geförderten unterschiedlichen Gebindetypen zu verifizieren.

Gemäß dem erfindungsgemäßen Verfahren zum Erstellen von gemischten Lagen für Paletten erfolgt zunächst das Zuweisen von Positionen von mindestens zwei unterschiedlichen Gebindetypen gleicher Dimension innerhalb eines Lagenbildes einer Produktionspalette. Die für die gemischte Lage aus unterschiedlichen Gebindetypen erforderlichen Gebinde werden aus den mehreren parallelen Bändern entsprechend ihrer zugewiesenen Position innerhalb des Lagenbildes der Produktionspalette gesteuert aus den Bändern austransportiert. In jedem der parallelen Bänder sind dabei nur sortenreine Gebinde enthalten. Die Gebinde werden sequentiell in Abhängigkeit ihrer Position innerhalb des Lagenbildes der Produktionspalette einem Gruppiertisch zugeführt. Der Gruppiertisch stellt daraus mittels der Steuerung das vordefinierte Lagenbild zusammen.

Die auf dem Gruppiertisch gemäß dem vordefinierten Lagenbild zusammengestellte Lage für die Produktionspalette wird von dem Gruppiertisch mittels eines Roboters auf der Produktionspalette abgesetzt.

Die Steuerung ist mit einem Touch-Panel versehen. Über das Touch-Panel kann ein Bediener die Positionierung der unterschiedlichen Gebindetypen innerhalb einer Lage aus unterschiedlichen Gebinden vornehmen. Einem Bediener ist dabei der prozentuale Anteil der verschiedenen Gebindetypen innerhalb einer Produktionspalette vorgegeben. Entsprechend dieser Vorgabe weist der Bediener mittels eines auf dem Touch-Panel dargestellten Lagenbildes der Produktionspalette den Gebindetypen die Positionen innerhalb einer Lage zu. Ebenso kann der Bediener auf dem Touch-Panel die Anzahl der Lagen auswählen, welche auf einer Palette gestapelt werden. Die von dem Bediener durchgeführte Zuweisung der Positionen der Gebindetypen innerhalb einer Lage erfolgt dadurch, dass der Bediener auf dem Touch-Panel die Positionen der Gebinde eines Gebindetyps innerhalb der Lage einer Produktionspalette zuweist. Anhand dieser Zuweisung ist es damit der Steuerung möglich, das System derart zu steuern, dass die für die Palettierung vorgesehenen Gebindetypen sequentiell richtig in den Gruppiertisch einlaufen, der aus den einlaufenden Gebindetypen gemäß dem vom Benutzer vordefinierten Lagebild die Lage einer Produktionspalette erstellt.

Ferner ist es von Vorteil, dass das System zum Erstellen von gemischten Lagen für Paletten auf mindestens zwei unterschiedlichen Gebindetypen gleicher Dimension mit einer Bedieneinheit versehen ist. Die Bedieneinheit ist als Touch-Panel ausgebildet. Auf dem Touch-Panel kann für jede der Vielzahl der Lagen einer Palette ein Lagenbild dargestellt werden. Anhand des Lagenbildes und unter Berücksichtigung eines vordefinierten Mischverhältnisses der einzelnen Gebindetypen eines jeden Gebindes eines Typs wird auf den Touch-Panel den Gebindetypen innerhalb der Lage von Gebinden für die Produktionspalette eine Position zugewiesen.

Das Mischverhältnis ist aus einer prozentualen Verteilung der mindestens zwei verschiedenen Gebindetypen innerhalb einer Produktionspalette bestimmt.

Das zu erstellende Lagenbild wird auf dem Touch-Panel graphisch dargestellt. Ebenso wird auf dem Touch-Panel die Position der verschiedenen Gebindetypen innerhalb des Lagenbildes graphisch, numerisch und/oder alphanumerisch gekennzeichnet, um für den Benutzer eine Unterscheidung zwischen den verschiedenen Gebindetypen zu ermöglichen. Diese Unterscheidung wird erst dann angezeigt, nachdem der Benutzer dem Gebinde innerhalb der Lage die Position zugewiesen hat.

Ferner erhält der Bediener über das Touch-Panel Informationen über die Anzahl der verschiedenen Gebindetypen, eine maximale Anzahl der Lagen auf einer Palette, dem Gebindetyp und/oder dem Typ der Palette. Diese Parameter kann der Bediener auswählen.

Auf dem Touch-Panel sind ferner mehrere Register dargestellt, über die der Benutzer weitere Informations- und Aktionsebenen am Touch-Panel aufruft. Hierüber kann der Benutzer einen Auftrag für die Erstellung von mehreren Paletten starten. Ebenso kann er einen Palettiermodus für einen neuen Auftrag erstellen und diesen entsprechend abspeichern. Ferner ist es noch möglich, zu einem anderen, bereits gespeicherten, Auftrag zu wechseln.

Die Vielzahl der auf dem Touch-Panel dargestellten Informations- und/oder Aktionsebenen ermöglichen es, einem Bediener von einer zentralen Stelle aus die verschiedenen Funktionen des Systems zu steuern und in die verschiedenen Funktionen bzw. Arbeitsweisen des Systems einzugreifen. Hierzu sind auf dem Touch-Panel entsprechende betätigbare Schalter angeordnet, über die der Bediener die entsprechenden Aktionen bzw. Eingriffe durchführen kann.

Ferner erhält der Bediener über das Touch-Panel Informationen darüber, wie viele Produktionspaletten erstellt wurden, wie der Ist-Zustand der verschiedenen Gebindetypen in den einzelnen parallelen Bändern ist, wie viele Lagen von sortenreinen Gebinden auf den vielen Paletten im Lager noch vorhanden sind und wie der Status des aktuell laufenden Auftrags ist.

Das System kann als eine Kommissionieranlage betrachtet werden und lädt nach individuellen Rezeptvorgaben sortenreine Produktpaletten und kommissioniert diese mit maximal vier verschiedenen Sorten in auftragsspezifische Kundenmischpaletten um. Der Typ jeder einzelnen Gebindeposition kann auf den Mischpaletten für jede Lage separat durch die Rezeptvorgabe auf dem Touch-Panel vorgegeben werden. Die Rezepte werden auf dem Touch-Panel der übergeordneten Steuerung kundenspezifisch erstellt. Die einzelnen Aufträge können somit auch kundenspezifisch für die spätere Verwendung abgespeichert werden.

Dem System zur Erstellung von gemischten Lagen für Paletten ist eine übergeordnete Steuerung zugeordnet. Diese übergeordnete Steuerung fungiert als Schnittstelle zu übergeordneten Systemen. Ebenso dient die übergeordnete Steuerung als Datenkonzentrator für alle weiteren Steuerungen. Über die übergeordnete Steuerung kann mittels eines geeigneten Displays (Touch-Panel) auf Systemdaten zugegriffen werden, ohne dabei die Maschinenfunktionen zu beeinflussen.

Im Folgenden sollen Ausführungsbeispiele die Erfindung und ihre Vorteile anhand der beigefügten Figuren näher erläutern.
- Figur 1: zeigt eine Draufsicht auf das System zum Erstellen von gemischten Lagen für Paletten.
- Figur 2: zeigt den in Figur 1 mit A bezeichneten Bereich des Systems, in welchem von den Paletten mit sortenreinen Gebinden einzelne sortenreine Lagen abgenommen werden.
- Figur 3: zeigt eine vergrößerte Darstellung des in Figur 1 mit B gekennzeichneten Bereichs, in welchem die vereinzelten Gebinde in mehreren parallelen Bändern bzw. Bahnen für die weitere Verarbeitung zwischengespeichert werden.
- Figur 4: zeigt eine vergrößerte Darstellung des in Figur 1 mit C gekennzeichneten Bereichs, bei dem die vereinzelten Gebinde sequentiell in einem Gruppiertisch einlaufen, der aus den einlaufenden verschiedenen Gebindetypen eine gemischte Lage herstellt.
- Figur 5: zeigt eine graphische Darstellung, welche auf dem Touch-Panel der Steuerung dem Bediener dargestellt wird, um diesen über die Produktverteilung in der laufenden Produktion zu informieren.
- Figur 6: zeigt eine graphische Darstellung, welche über das Touch-Panel dem Benutzer dargestellt wird, mit der der Benutzer verschiedene Systemfunktionen steuern kann.
- Figur 7: zeigt eine graphische Darstellung, welche über das Touch-Panel der Steuerung des Systems dem Benutzer dargestellt wird und diesen über Produktionsdaten und den Umlaufbestand der aktuell zu verarbeitenden Gebinde, Flaschen und Paletten informiert.
- Figur 8: zeigt eine graphische Darstellung auf dem TouchPanel der Steuerung, die den Benutzer über den Umlaufbestand am Depalettierer informiert.
- Figur 9: zeigt eine graphische Darstellung, welche über das Touch-Panel der Steuerung dem Benutzer dargeboten wird und ihn so über die Daten des Palettentransports innerhalb des Systems informiert.
- Figur 10: zeigt eine graphische Darstellung, welche über das Touch-Panel der Steuerung dem Benutzer dargeboten wird und diesen über den Gebindetransport innerhalb des Systems informiert.
- Figur 11: zeigt eine graphische Darstellung, welche über das Touch-Panel dem Benutzer dargeboten wird und diesen über den Zustand und den Verlauf des Auftrags an einer Beladestation informiert, die die gemischten Lagen aus den Gebinden auf eine Produktionspalette absetzt.
- Figur 12: zeigt eine graphische Darstellung, welche auf dem Touch-Panel dem Benutzer dargeboten wird und mit welcher der Benutzer innerhalb eines Lagenbildes eines ersten Gebindetyps den verschiedenen Gebindetypen entsprechende Positionen innerhalb des Lagenbildes zuweisen kann.
- Figur 13: zeigt eine weitere Ausführungsform einer graphischen Darstellung für ein zweites Lagenbild, welches dem Bediener auf dem Touch-Panel der Steuerung dargeboten wird, wobei der Bediener innerhalb des Lagenbildes den verschiedenen Gebindetypen deren Positionen zuweisen kann.
- Figur 14: zeigt ein Palettierschema für einen bestimmten Gebindetyp, bei dem in einer Lage Gebinde vorhanden sind.
- Figur 15: zeigt eine weitere Ausführungsform der Erstellung eines Lagenbildes, bei dem der gleiche Gebindetyp wie aus Figur 14 verwendet wird, wobei jedoch weniger Gebinde innerhalb einer Lage vorhanden sind.
- Figur 16: zeigt eine weitere Ausführungsform, bei der kleinere Gebinde zu einer Lage zusammengestellt werden, so dass innerhalb einer Lage 36 Gebinde auf einer Palette abgesetzt werden können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße System oder das erfindungsgemäße Verfahren ausgestaltet sein können und stellen keine abschließende Begrenzung dar.

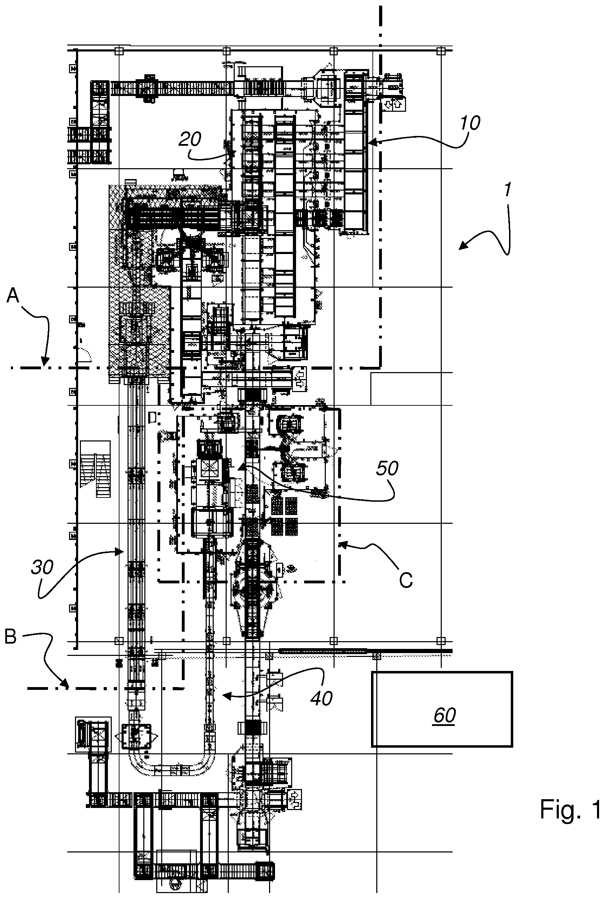

Figur 1 zeigt ein System zum Erstellen von gemischten Lagen aus Paletten. Das System 1 umfasst ein Lager 10, in dem mindestens zwei unterschiedliche Gebindetypen auf mehreren Paletten aus mehreren Lagen von jeweils sortenreinen Gebinden gelagert sind. Dem Lager 10 ist ein Depalettierer 20 nachgeschaltet, der die sortenreinen Gebinde in Form von jeweils einer Lage von einer Palette abnimmt und diese dem System 1 zuführt. Im Lager 10 sind mindestens zwei unterschiedliche Gebindetypen auf mehreren Paletten sortenrein gelagert. In einer bevorzugten Ausführungsform der Erfindung sind vier unterschiedliche Gebindetypen auf mehreren Paletten sortenrein im Lager 10 gelagert. Der Depalettierer 20 entnimmt entsprechend der Steuerung des Systems 1 nacheinander jeweils eine sortenreine Lage eines vorbestimmten Gebindetyps von den Paletten mit sortenreinen Gebinden ab und führt diese einem Speichersystem 30 zu. Das Speichersystem 30 besteht aus mehreren parallelen Bändern 30₁, 30₂, ... 30ₙ, in denen die einzelnen Gebindetypen jeweils sortenrein für eine weitere Verarbeitung gespeichert bzw. der weiteren Verarbeitung zugeführt werden.

Von den Bändern 30₁, 30₂, ... 30ₙ gelangen die Gebinde gemäß einer vorgegebenen Reihenfolge zu dem mindestens einen Zuführband 40, das die Gebinde einem Gruppiertisch 50 zuführt, der dem Zuführband 40 nachgeschaltet ist. Dem System 1 ist eine Steuerung 60 zugeordnet, die dafür sorgt, dass die einzelnen unterschiedlichen Gebindetypen in Abhängigkeit von deren vordefinierten Positionen der unterschiedlichen Gebindetypen in einem Lagenbild 22 einer Lage 24 einer Produktionspalette 12 dem Gruppiertisch 50 zuführbar sind. Der Gruppiertisch 50 dient somit dazu, anhand der vordefinierten Positionen der unterschiedlichen Gebindetypen innerhalb einer gemischten Lage 24 die Gebindetypen zu positionieren.

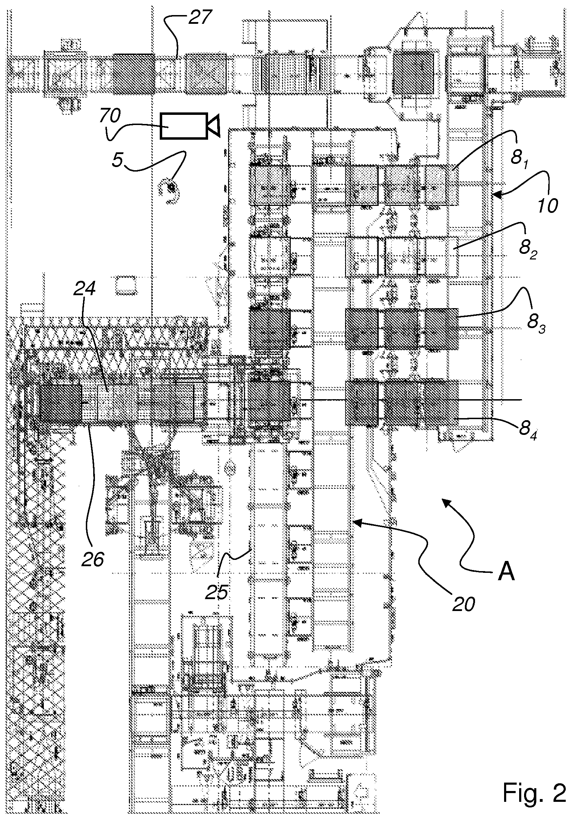

Figur 2 zeigt den Teil des Systems 1, welche in Figur 1 mit A bezeichnet ist. Über eine Transporteinrichtung 27 können dem Lager 10 Paletten zugeführt werden, die aus sortenreinen Gebindetypen aufgebaut sind. Diese Paletten werden entsprechend der Anforderung bzw. des Verbrauchs des jeweiligen Gebindetyps in dem Lager 10 eingelagert. Von dem Lager 10 können die Paletten mit den sortenreinen Gebindetypen dem Depalettierer 20 zugeführt werden. In der hier dargestellten Ausführungsform ist der Depalettierer 20 als Abschieber ausgebildet. Bei der in Figur 2 gezeigten Ausführungsform befinden sich im Lager 10 vier unterschiedliche Gebindetypen, welche auf den Paletten 8₁, 8₂, 8₃ und 8₄ jeweils sortenrein gelagert sind. Es ist für einen Fachmann selbstverständlich, dass das System 1 nicht auf die Verarbeitung von vier unterschiedlichen Gebindetypen beschränkt ist. Somit ist die Darstellung in den Figuren 1 bis 4 nicht als Beschränkung der Erfindung anzusehen.

Der Abschieber umfasst ein Schienensystem 25 und kann somit auf einmal die vier Paletten 8₁, 8₂, 8₃ und 8₄ mit den jeweils sortenreinen Gebindetypen aufnehmen. Von dem Schienensystem 25 wird durch den Abschieber jeweils eine komplette Lage 24 aus sortenreinen Gebinden auf ein Fördersystem 26 übergeben. Anschließend wird die sortenreine Lage 24 der Gebinde vereinzelt und den parallelen Bändern 30₁, 30₂, 30ₙ zugeführt.

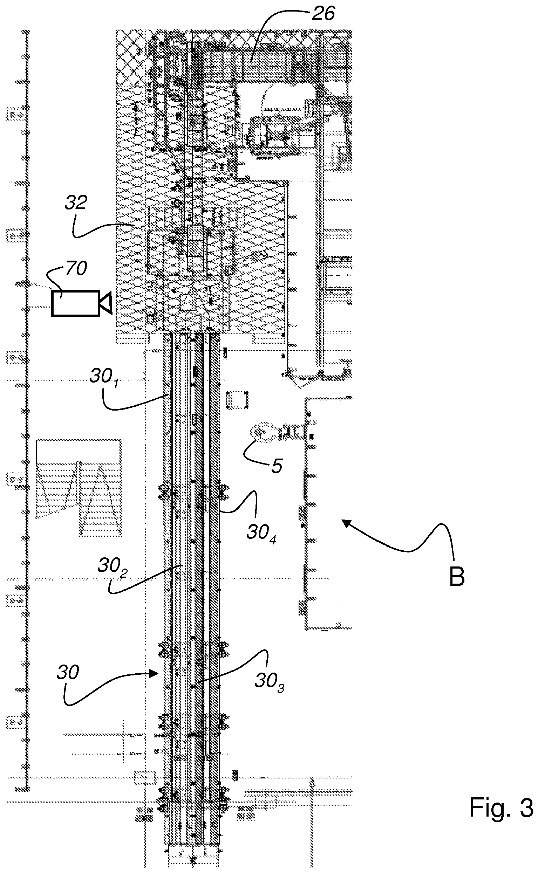

Figur 3 zeigt den in Figur 1 mit B gekennzeichneten Bereich des Systems 1. In diesem Bereich ist der Speicher 30 angeordnet, der in Form von mehreren parallelen Bändern 30₁, 30₂, 30₃ und 30₄ besteht. In der hier dargestellten Ausführungsform sind vier parallele Bänder vorgesehen, da, wie bereits oben erwähnt, mit dem System 1 vier unterschiedliche Gebindetypen gleicher Dimension bzw. Größe verarbeitet werden. Wie bereits in der Beschreibung zu Figur 2 erwähnt, werden die einzelnen Gebinde einer sortenreinen Lage 24 in der Vereinzelungseinheit 32 vereinzelt und jeweils sortenrein einem der Bänder 30₁ bis 30₄ zugeführt. In jedem der parallelen Bänder 30₁ bis 30₄ befinden sich somit Gebinde von jeweils einem Typ.

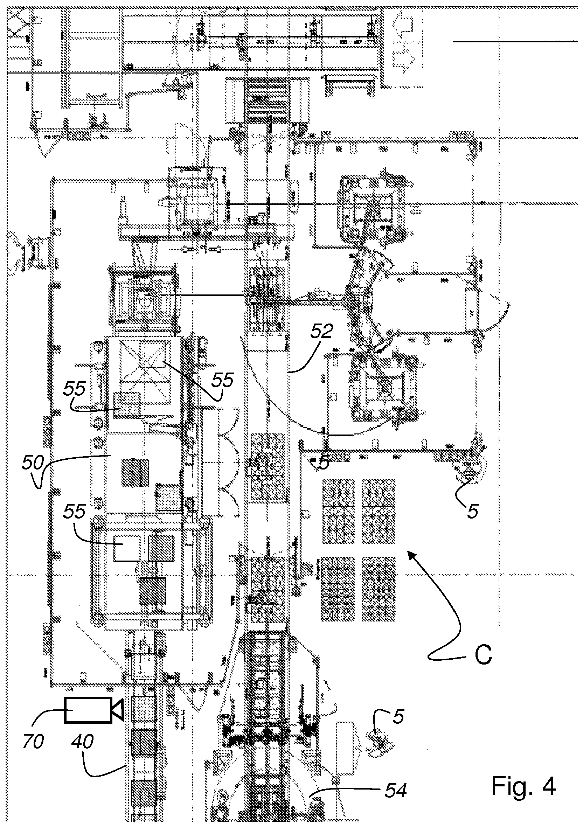

Figur 4 zeigt den in Figur 1 mit C bezeichneten Ausschnitt des Systems 1. Über das Zuführband 40 gelangen die vereinzelten Gebinde 55 entsprechend dem zu erstellenden Lagebild aus unterschiedlichen Gebindetypen zu dem Gruppiertisch 50. Mit dem Gruppiertisch 50 werden die einzelnen Gebinde 55 entsprechend angeordnet, dass sich das vordefinierte Lagenbild 14 ergibt. Die fertige Lage 24 wird dann auf einer Palette abgesetzt. Sind alle für eine Palette 12 erforderlichen Lagen 24₁, 24₂,..., auf der Palette 12 abgesetzt, wird diese über ein Transportband 52 zu einer Sicherungsstation 54 transportiert, an der die Palette beispielsweise mit Folie umwickelt wird. Ebenso ist es denkbar, dass die Folie mit einer Schrumpfhaube versehen wird, die letztendlich eine Transportsicherung für die auf der Palette 12 in Lagenform gestapelten Gebinde 55 darstellt.

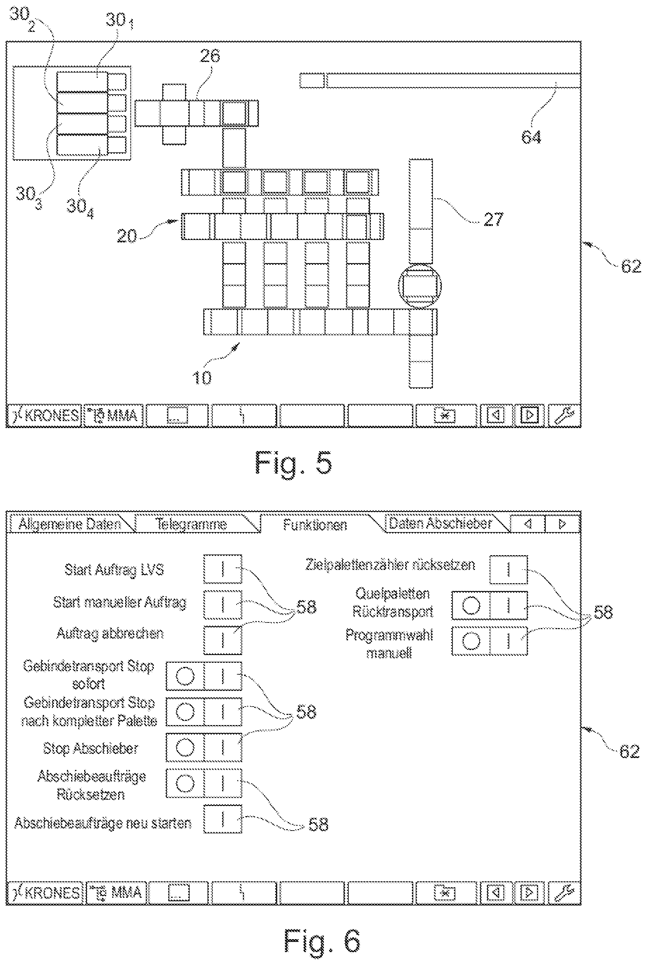

Figur 5 zeigt eine graphische Darstellung des Lagers 10, des Depalettierers 20 und des Speichers 30 auf einem Touch-Panel 62 der Steuerung 60. Die Steuerung 60 ist mit dem Touch-Panel 62 versehen, über das der Bediener 5 Informationen erhält bzw. über das der Bediener 5 Eingaben für die Steuerung des Systems 1 machen kann. In der in Figur 5 gezeigten graphischen Darstellung auf dem Touch-Panel 62 erhält der Benutzer z. B. eine Übersicht, wie viele Gebinde sich in den einzelnen Bändern 30₁, 30₂, 30₃ und 30₄ befinden. Ebenso wird dem Bediener 5 dargestellt, wie der Lagerzustand im Lager 10 ist und wie der Zustand der Paletten im Depalettierer 20 ist. In einem oberen Bereich des Touch-Panels 62 ist in einem Fenster 64 eine Wiedergabe des gerade zu verarbeitenden Auftrags 64 dargestellt.

Figur 6 zeigt eine graphische Darstellung, welche dem Bediener 5 auf dem Touch-Panel 62 der Steuerung 60 wiedergegeben wird. Über diese Darstellung kann der Bediener 5 die Funktionen des Systems 1 steuern bzw. ein- und/oder ausschalten. Auf dem Touch-Panel 62 sind dem Benutzer mehrere Schalter 58 dargestellt. Die Schalter 58 ermöglichen es einem Bediener 5, einen automatischen Auftrag zu starten, einen manuellen Auftrag zu starten oder einen Auftrag abzubrechen. Ferner ist es möglich, mit den Schaltern 58 den Gebindetransport sofort zu stoppen, den Gebindetransport nach einer kompletten Produktionspalette zu stoppen, den Depalettierer zu stoppen, die Depalettierungsaufträge zurückzusetzen oder die Depalettierungsaufträge neu zu starten. Ferner ist es möglich, mit den Schaltern 58 den Produktionspalettenzähler zurückzusetzen, den Quellpalettenrücktransport zu initiieren oder eine manuelle Programmwahl zu ermöglichen.

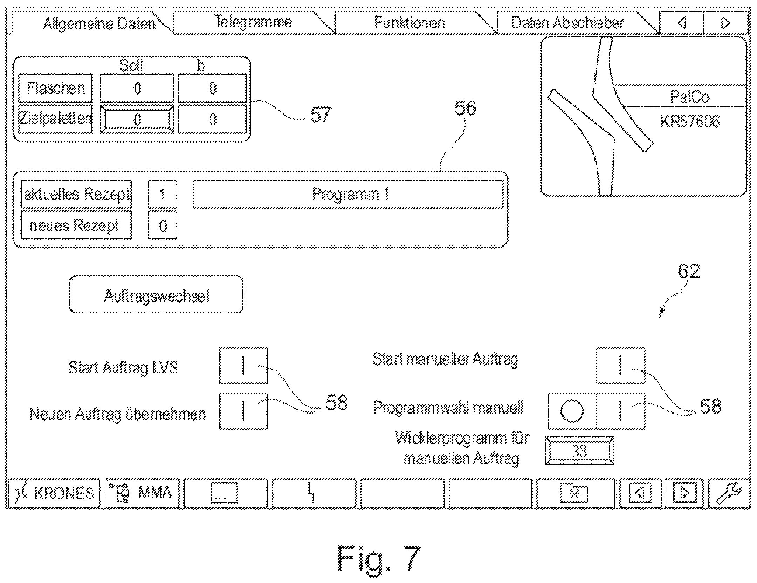

Die in Figur 7 wiedergegebene graphische Darstellung auf dem Touch-Panel 62 ermöglicht es dem Bediener 5, über ebenfalls mehrere Schalter 58 einen automatischen Auftrag oder einen manuellen Auftrag zu starten, ferner ist es möglich, mit den Schaltern einen neuen Auftrag zu übernehmen oder eine Programmwahl manuell durchzuführen. Ebenso erhält der Bediener 5 bei der in Figur 7 gezeigten Darstellung eine Information über den Soll- und Ist-Zustand der verarbeiteten Gebinde bzw. der verarbeiteten Produktionspaletten. Ebenso wird ihm in einem weiteren Fenster 56 angezeigt, welches aktuelle Programm mit dem System abgearbeitet wird. Ebenso ist es ihm möglich, innerhalb des Fensters 56 ein neues Rezept bzw. neues Programm für einen neuen Auftrag einzufügen.

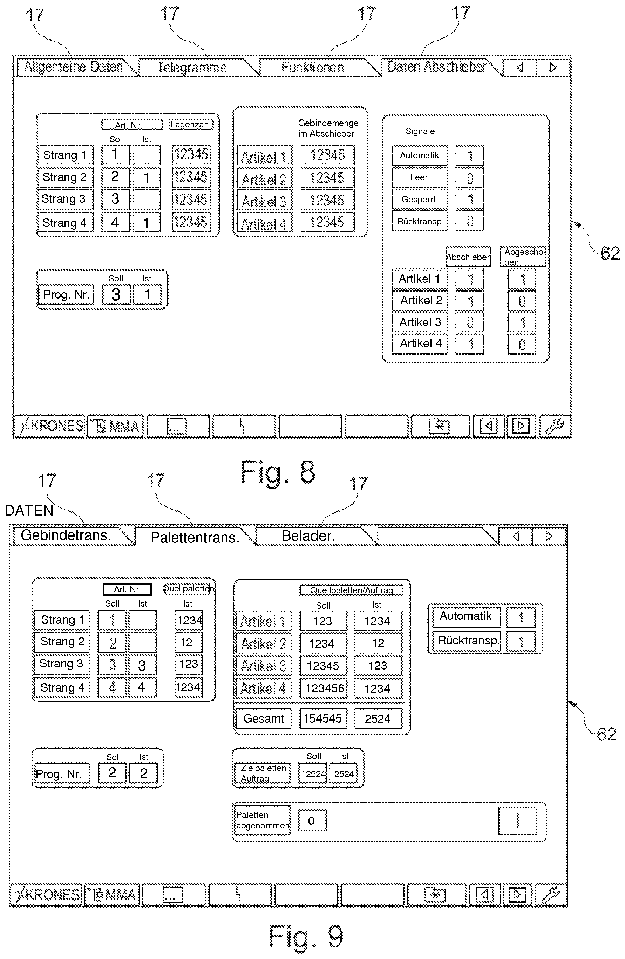

Bei der in Figur 8 gezeigten graphischen Darstellung auf dem Touch-Panel 62 erhält der Bediener Information darüber, wie der Umlaufbestand der Gebinde bzw. Paletten im Depalettierer 20 ist.

Bei der in Figur 9 gezeigten graphischen Darstellung auf dem Touch-Panel 62 erhält der Bediener eine Information darüber, wie der Zustand des Palettentransports (Paletten 8₁, 8₂, ... 8ₙ) mit sortenreinen Gebinden und Produktionspaletten 12₁, 12₂, ..., 12ₙ, innerhalb des Systems ist.

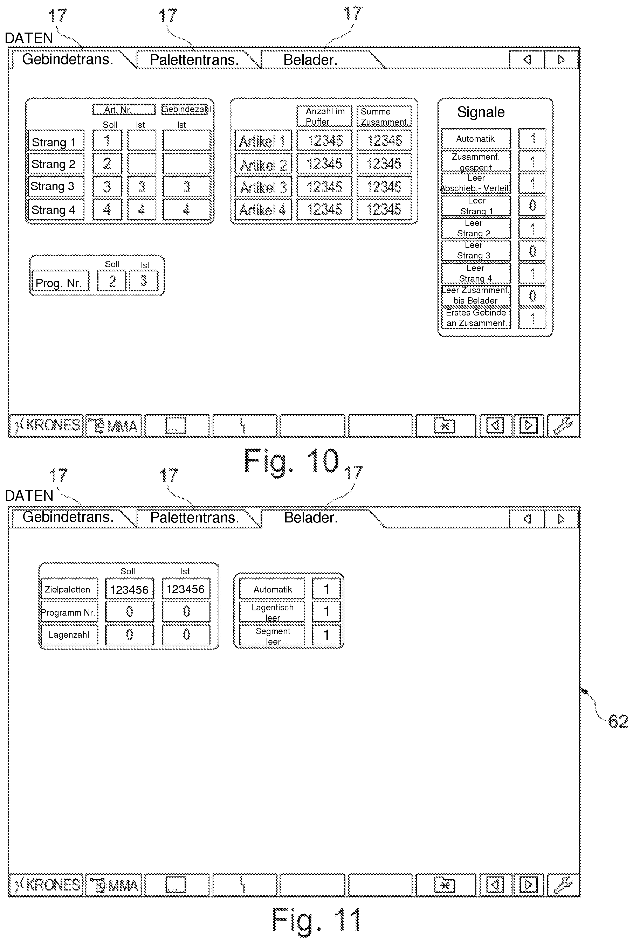

Bei der in Figur 10 gezeigten graphischen Darstellung auf dem Touch-Panel 62 erhält der Benutzer Informationen darüber, wie der Gebindetransport innerhalb des Systems abläuft und wie der Zustand der momentan verarbeiteten Gebinde ist.

Bei der in Figur 11 gezeigten graphischen Darstellung auf dem Touch-Panel 62 erhält der Bediener Informationen darüber, wie die Erstellung der Produktionspaletten 12₁, 12₂, ..., 12ₙ fortschreitet.

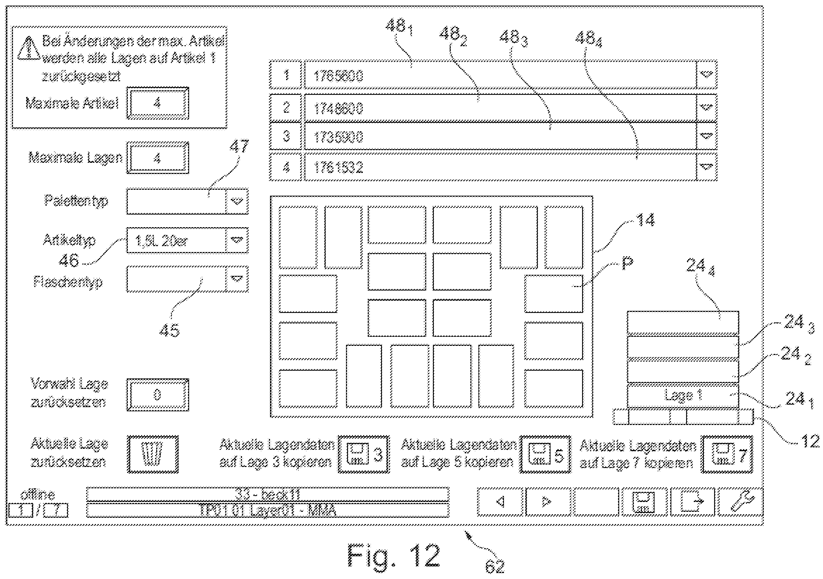

Figur 12 zeigt eine graphische Darstellung, welche dem Bediener 5 auf dem Touch-Panel 62 dargestellt ist. Über diese Darstellung kann der Bediener 5 die unterschiedlichen Gebindetypen 6₁, 6₂, 6₃ und 6₄ entsprechend ihrem prozentualen Anteil innerhalb der Produktionspalette 12 innerhalb des Lagenbildes 14 verteilen. Die Verteilung geschieht dadurch, dass der Benutzer auf dem Lagenbild 14, welches auf dem Touch-Panel 62 dargestellt wird, die gewünschte Position P eines Gebindetyps anklickt und bestätigt. Somit ist diese Position P fest vorgegeben. Dies führt er mit allen Positionen des Lagenbildes 14 durch und verteilt entsprechend dem prozentualen Anteil der einzelnen Gebindetypen diese entsprechend innerhalb einer Lage 24₁, 24₂, 24₃ und 24₄. In der hier dargestellten Ausführungsform werden auf der Produktionspalette 12 vier Lagen 24₁, 24₂, 24₃ und 24₄ abgesetzt. Nachdem all diese vier Lagen 24₁, 24₂, 24₃ und 24₄ aus jeweils gemischten Gebindetypen auf dieser Produktionspalette 12 abgesetzt sind, ist diese Produktionspalette 12 für den Versand an einen vordefinierten Kunden fertig. In einem auf dem Touch-Panel 62 dargestellten Drop-Down-Menü 48 kann der Benutzer die verschiedenen Gebindetypen auswählen, welche zu einem bestimmten Auftrag gehören. Ebenso ist es möglich, mit der in Figur 12 gezeigten Darstellung, dass der Benutzer mit einem Drop-Down-Menü 47 den Palettentyp auswählt. Mit einem anderen Drop-Down-Menü 46 kann der Bediener 5 den Artikeltyp auswählen. Ferner ist es möglich, mit einem weiteren Drop-Down-Menü 45 den Kunden auszuwählen, für den die Aufträge der Paletten mit gemischten Lagen aus unterschiedlichen Gebindetypen erstellt werden sollen. Wenn die Positionen der unterschiedlichen Gebindetypen im Lagenbild 14 zugewiesen worden sind, werden diese Positionen in entsprechender Weise gekennzeichnet. Es ist z. B. möglich, dass für jeden Gebindetyp eine andere Farbkodierung verwendet wird. Eine weitere Möglichkeit wäre es, dass für jeden Gebindetyp eine numerische und/oder alphanumerische Kennzeichnung auf dem Touch-Panel 62 dargestellt wird, um dem Bediener 5 anzuzeigen, dass die Position für den bestimmten Gebindetyp bereits vergeben ist.

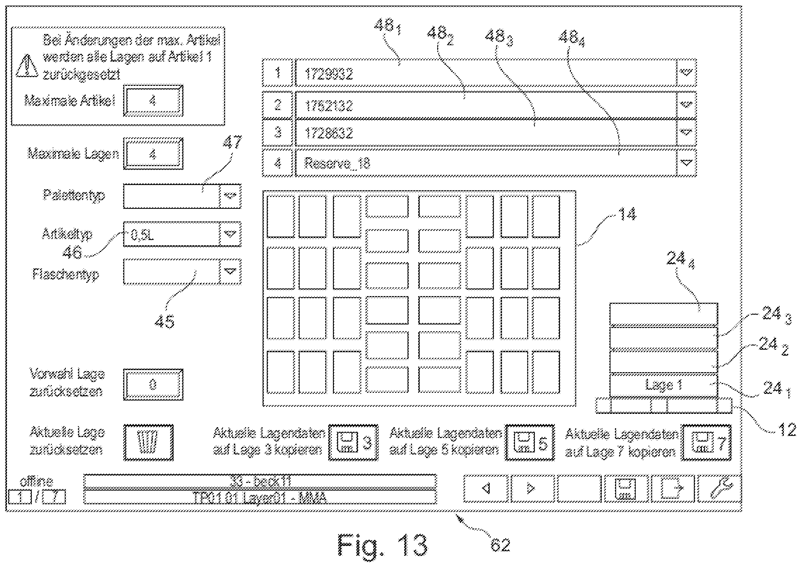

Figur 13 zeigt eine weitere Ausführungsform einer graphischen Darstellung auf dem Touch-Panel 62 über das der Benutzer die verschiedenen Gebindetypen einem anderen Lagenbild 14 zuweisen kann. Hierbei handelt es sich um 0,5 Liter Flaschen, die in Gebinden zusammengefasst sind und in entsprechender Weise im Lagenbild 14 verteilt werden sollen. Wie bereits oben erwähnt, richtet sich die Verteilung an die prozentuale Verteilung der einzelnen Gebindetypen innerhalb des Lagenbildes 14, bzw. letztendlich innerhalb einer gemischten Lage, welche auf einer Produktionspalette 12 abgesetzt werden soll. In der in Figur 13 gezeigten Darstellung umfasst das Lagenbild 14 36 Positionen, an denen die verschiedenen Gebindetypen positioniert werden können.

Anhand der vorgegebenen Positionierung der Gebinde innerhalb des Lagenbildes 14, wie dies in den Figuren 12 und 13 dargestellt ist, wird das System 1 in entsprechender Weise gesteuert, damit diejenigen Gebinde, welche an einer vordefinierte Position P innerhalb des Lagenbildes 14 zu positionieren sind, rechtzeitig auf den Gruppiertisch 50 gelangen.

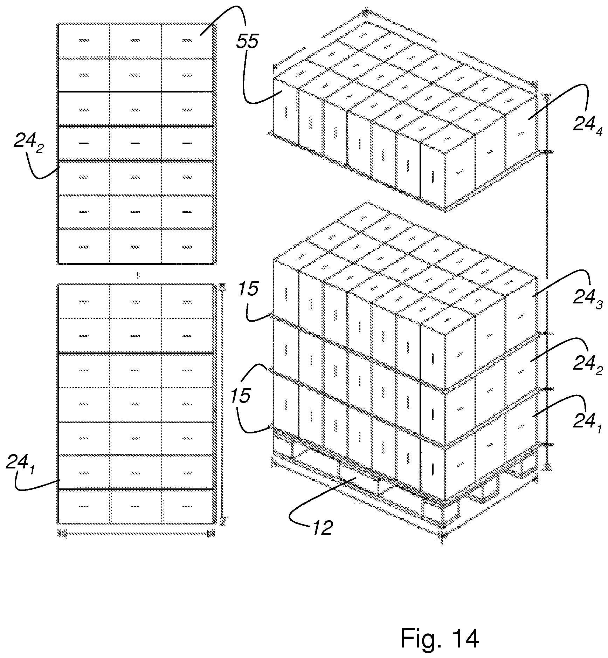

Figur 14 zeigt eine perspektivische Ansicht einer Produktionspalette 12, auf der vier Lagen 24₁, 24₂, 24₃ und 24₄ aus gemischten Gebindetypen gleicher Dimension abgesetzt werden. Jede Lage 24₁, 24₂, 24₃ und 24₄ umfasst dabei 21 Gebinde. Mit dieser Art der Lagenbildung ist kein Verbund von einer Lage zu einer nächstfolgenden Lage erzielbar.

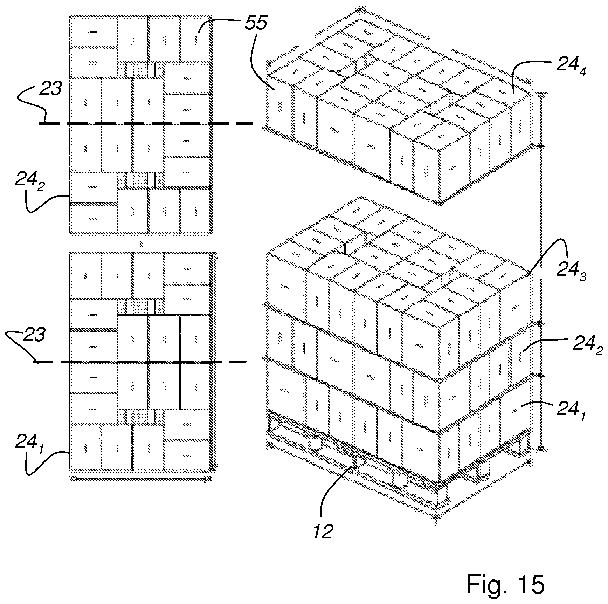

Figur 15 zeigt eine weitere Ausführungsform, bei der ebenfalls auf einer Produktionspalette 12 vier Lagen 24₁, 24₂, 24₃ und 24₄ aus 20 Gebinden abgesetzt werden. Dabei sind die Gebinde innerhalb einer jeden Lage derart versetzt angeordnet, dass zwischen zwei aufeinander folgenden Lagen eine Verbundstapelung der einzelnen Lagen 24₁, 24₂, 24₃ und 24₄ möglich ist. Zwischen den einzelnen Lagen 24₁, 24₂, 24₃ und 24₄ können auch hier Trennblätter 15 eingefügt sein. Neben der perspektivischen Darstellung der Produktionspalette 12 sind die erste Lage 24₁ und die zweite Lage 24₂ in der Draufsicht dargestellt. Hieraus wird ersichtlich, dass durch das Aufsetzen der zweiten Lage 24₂ auf die erste Lage 24₁ die Verbundbauweise erzielt werden kann. Anders ist dies bei der in Figur 14 gezeigten Darstellung neben der perspektivischen Darstellung der Produktionspalette 12. Hier sind sowohl in der ersten Lage 24₁ als auch 24₂ die einzelnen Gebinde in einem gleichen Raster angeordnet. Somit ergibt sich bei dieser Anordnung keine Verbundbauweise. Die Produktionspalette 12 kann später entlang einer Symmetrieachse 23 geteilt werden.

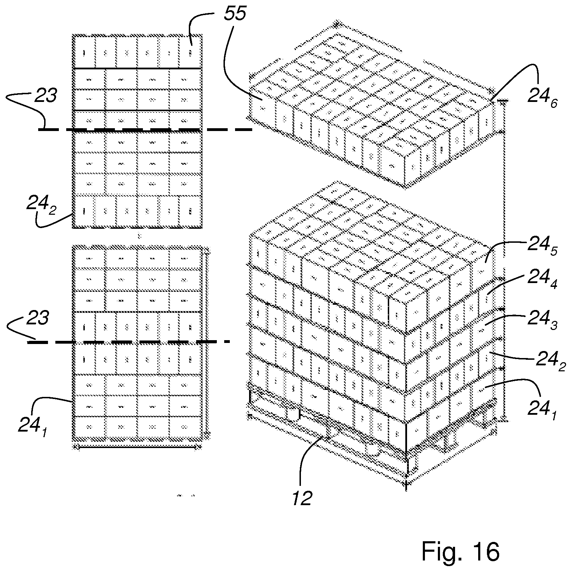

Bei der in Figur 16 gezeigten Darstellung sind auf der Produktionspalette 12 sechs Lagen 24₁, 24₂, 24₃, 24₄, 24₅ und 24₆ gestapelt. Die Gebinde innerhalb einer jeden Lage bestehen dabei aus kleineren Flüssigkeitsbehältern, als bei den in Figur 14 und Figur 15 gezeigten Darstellungen. Neben der perspektivischen Darstellung der Produktionspalette 12 ist in Figur 16 das Lagenbild 14 der ersten Lage 24₁ und das Lagenbild der zweiten Lage 24₂ dargestellt. Aufgrund der unterschiedlichen Anordnung der Gebinde 55 im Lagenbild 14 bei zwei aufeinander folgenden Lagen 24₁ und 24₂ resultiert hier ebenfalls eine Verbundbauweise. Die in Figur 16 gezeigte Anordnung der Gebinde 55 ist bzgl. einer Symmetrieachse 23 symmetrisch. Somit ist es möglich, dass die Produktionspalette 12 später entlang dieser Symmetrieachse 23 geteilt werden kann. Dies ist besonders vorteilhaft, da dadurch eine kleinere Aufstellfläche in einem Verkaufsraum benötigt wird.

Wie bereits oben erwähnt, umfasst die Steuereinheit 16 eine Bedieneinheit, die als Touch-Panel 62 ausgebildet ist und über die ein Bediener 5 verschiedene Eingabemöglichkeiten hat. Die wichtigste Eingabemöglichkeit ist, dass der Bediener 5 auf dem Touch-Panel 62 ein Lagenbild 14 einer Palette dargestellt bekommt und innerhalb dieses Lagenbildes 14 den unterschiedlichen Gebindetypen, welche innerhalb einer Lage zu platzieren sind, die Position zuweisen kann.

Ebenso ist das Touch-Panel 62 mit mehreren Registern 17 versehen. Mittels dieser Register 17 kann der Bediener 5 weitere Informations- und Aktionsebenen am Touch-Panel 62 aufrufen. Ebenso kann er einen Auftrag für die Erstellung von mehreren Paletten mit Lagen, die mindestens zwei unterschiedliche Gebindetypen enthalten, starten. Weiterhin ist es dem Bediener 5 möglich, einen neuen Palettiermodus für einen neuen Auftrag zu erstellen oder zu einem anderen Auftrag zu wechseln.

In einer der Informations- und/oder Aktionsebenen, die das Touch-Panel 62 dem Bediener 5 darbietet, erhält der Bediener 5 Produktionsdaten hinsichtlich der Erstellung von Produktionspaletten 12, die mit mindestens zwei verschiedenen Gebindetypen versehen werden.

## Patentansprüche

1. System (1) zum Erstellen von gemischten Lagen (24) für Paletten (8₁, 8₂, 8₃, 8₄) mit
einem Lager (10) zur Lagerung von mindestens zwei unterschiedlichen Gebindetypen gleicher Größe auf mehreren Paletten (8₁, 8₂, 8₃, 8₄) aus mehreren Lagen (24) von sortenreinen Gebinden (55),
einem Depalettierer (20) zum Abnehmen jeweils einer sortenreinen Lage (24) von der sortenreinen Palette (8₁, 8₂, 8₃, 8₄) und
einem Gruppiertisch (50) zum Gruppieren der Gebinde (55),
mehrere einzelne parallele Bänder (30₁, 30₂,..., 30_{N}) zum jeweiligen Aufnehmen und Speichern der vereinzelten Gebinde (55) der sortenreinen Lagen (24) eines Gebindetyps, **gekennzeichnet durch** ein einziges Zuführband (40) für den Gruppiertisch (50), das den parallelen Bändern (30₁, 30₂,..., 30_{N}) nachgeschaltet ist,
eine Steuerung (60), die dem Depalettierer (20), dem Zuführband (40) und dem Gruppiertisch (50) zugeordnet ist, zum Zuführen der mindestens zwei unterschiedlichen Gebindetypen als Funktion von vordefinierten Positionen (P) der unterschiedlichen Gebindetypen in einem Lagenbild (14) einer Lage (24) einer Produktionspalette (12) zum Gruppiertisch (50),
eine Ein-/Ausgabe-Einheit (62) der Steuerung (60) zum Erhalten einer Zustandsinformation vom System (1) für ein Bediener und zum Vorgeben der Positionierung der unterschiedlichen Gebindetypen innerhalb der Lage (24) aus unterschiedlichen Gebinden (55),
mindestens eine Bildverarbeitungseinrichtung (70) zum Überprüfen der einzelnen Gebinde (55) auf Beschädigungen, auf Zugehörigkeit zum jeweiligen Produktionsauftrag und/oder auf sequentielle Richtigkeit des Transports in Abhängigkeit von den Positionen (P) der unterschiedlichen Gebindetypen im Lagenbild (14) der Lage (24) einer Produktionspalette (12),
mindestens eine Bildverarbeitungseinrichtung (70), die dem Depalettierer (20) zugeordnet ist, zum Verifizieren der für den Auftrag erforderlichen Gebindetypen,
mindestens eine Bildverarbeitungseinrichtung (70), die in dem Bereich angeordnet ist, an dem die vereinzelten Gebinde (55) der sortenreinen Lagen (24) eines Gebindetyps in die einzelnen Bänder (30₁, 30₂,..., 30_{N}) laufen, und
mindestens eine Bildverarbeitungseinrichtung (70), die dem Zuführband (40) zum Gruppiertisch (50) zugeordnet ist, zum Verifizieren der gemäß dem Lagenbild (14) einer Lage (24) einer Produktionspalette (12) aus den mehreren Bändern (30₁, 30₂,..., 30_{N}) geförderten unterschiedlichen Gebindetypen,
wobei der Gruppiertisch (50) derart ausgestaltet ist, dass er die Gebinde (55) unterschiedlicher Gebindetypen anhand der vordefinierten Positionen (P) der unterschiedlichen Gebindetypen und des Lagenbilds (14) so positioniert, dass die Lage (24) eine gemischte Lage (24) bildet.

2. System (1) nach Anspruch 1, wobei dem Gruppiertisch (50) ein Palettierer nachgeschaltet ist, der die gemischte Lage (24) aus den mindestens zwei Gebindetypen auf der Produktionspalette (12) absetzt.

3. System (1) nach einem der voran stehenden Ansprüche, wobei auf der Ein-/Ausgabe-Einheit (62) für jede der Vielzahl der Lagen (24) einer Produktionspalette (12) ein Lagenbild (14) darstellbar ist und dass ein Bediener (5) unter Berücksichtigung eines vordefinierten Mischverhältnisses der einzelnen Gebindetypen eines jeden Gebindes (55) eines Typs eine Position (P) im jeweiligen Lagenbild (14) zuweist.

4. System (1) nach Anspruch 3 zudem derart ausgestaltet, dass im Lagenbild (14) auf der Ein-/Ausgabe-Einheit (62) eine graphische, numerische und/oder alphanumerische Markierung an den verschiedenen Gebindetypen erscheint, nachdem ein Bediener (5) dem Gebinde (55) innerhalb der Lage (24) die Position (P) zugewiesen hat.

5. System (1) nach einem der Ansprüche 3 bis 4, wobei auf der Ein-/Ausgabe-Einheit (62) mehrere Register (17) dargestellt sind zum Aufrufen weiterer Informations- und Aktionsebenen an der Ein-/Ausgabe-Einheit (62), zum Starten eines Auftrags für die Erstellung mehrerer Produktionspaletten (12) mit Lagen (24), die mindestens zwei unterschiedliche Gebindetypen enthalten, zum Erstellen eines neuen Palettiermodus für einen neuen Auftrag oder zum Wechseln zu einem anderen Auftrag.

6. System (1) nach Anspruch 5, wobei in mindestens einer der Informations- und/oder Aktionsebenen der Ein-/Ausgabe-Einheit (62) mehrere Schalter (58) zum zentralen Eingreifen in die Funktionsweise des Systems (1) darstellt sind, wobei je ein Schalter (58) einer Funktion des Systems (1) zum Erstellen von gemischten Lagen (24) für Produktionspaletten (12) zugeordnet ist; oder
wobei in einer der Informations- und/oder Aktionsebenen die Ein-/Ausgabe-Einheit (62) dem Bediener (5) Produktionsdaten hinsichtlich der Erstellung von Produktionspaletten (12) mit mindestens zwei verschiedenen Gebindetypen und den Status der im System (1) vorhandenen sortenreinen Paletten (8₁, 8₂, 8₃, 8₄) der mindestens zwei Gebindetypen darstellt; oder
wobei in einer der Informations- und/oder Aktionsebenen die Ein-/Ausgabe-Einheit (62) dem Bediener (5) Information weitergibt, wie die Verteilung und/oder die Anzahl verschiedener Gebindetypen im System (1) zum Erstellen von gemischten Lagen (24) für Produktionspaletten (12) ist und ebenfalls eine graphische Übersicht der in der Produktion vorhandenen Paletten (8₁, 8₂, 8₃, 8₄) mit jeweils einem Gebindetyp; oder
wobei in einer der Informations- und/oder Aktionsebenen auf der Ein-/Ausgabe-Einheit (62) der Bediener (5) Information über die mit einem Depalettierer (20) verarbeiteten Paletten (8₁, 8₂, 8₃, 8₄) mit sortenreinen Gebinden (55) erhält; oder
wobei in einer der Informations- und/oder Aktionsebenen auf der Ein-/Ausgabe-Einheit (62) der Bediener (5) Informationen über einen Transport von Paletten (8₁, 8₂, 8₃, 8₄) im System (1) erhält; oder
wobei in einer der Informations- und/oder Aktionsebenen auf der Ein-/Ausgabe-Einheit (62) der Bediener (5) Informationen über einen Gebindetransport der verschiedenen Gebindetypen im System (1) erhält; oder
wobei in einer der Informations- und/oder Aktionsebenen auf der Ein-/Ausgabe-Einheit (62) der Bediener (5) Informationen über die beladenen Produktionspaletten (12) erhält.

7. Verfahren zum Erstellen von gemischten Lagen (24) für Paletten (8₁, 8₂, 8₃, 8₄) für ein System (1) nach einem der voran stehenden Ansprüche mit den folgenden Schritten:
• Zuweisen von Positionen (P) von Gebinden (55) mindestens zweier unterschiedlicher Gebindetypen gleicher Dimension innerhalb eines Lagenbildes (14) einer Produktionspalette (12);
• Gesteuertes Austransportieren der Gebinde (55) aus mehreren parallelen Bändern (30₁, 30₂,..., 30_{N}) entsprechend ihrer zugewiesenen Position (P) innerhalb des Lagenbildes (14) der Produktionspalette (12) auf einem einzigen Zuführband (40) für einen Gruppiertisch (50), wobei jedes Band (30₁, 30₂,..., 30_{N}) nur sortenreine Gebinde (55) enthält; und
• Gesteuertes sequentielles Zuführen der Gebinde (55) in Abhängigkeit ihrer zugewiesenen Position (P) innerhalb des Lagenbildes (14) der Produktionspalette (12) zum Gruppiertisch (50), durch den die Lage (24) entsprechend des vordefinierten Lagenbildes (14) zusammengestellt wird.

8. Verfahren nach Anspruch 7, wobei die auf den Gruppiertisch (50) gemäß dem vordefinierten Lagenbild (14) zusammengestellte gesamte Lage (24) auf der Produktionspalette (12) abgesetzt wird.

9. Verfahren nach einem der Ansprüche 7 bis 8, wobei mehrere Paletten (8₁, 8₂, 8₃, 8₄) aus mehreren Lagen (24) von sortenreinen Gebinden (55) bereitgestellt werden, von jeweils einer der mehreren Paletten (8₁, 8₂, 8₃, 8₄) eine sortenreine Lage (24) entnommen wird und die Gebinde (55) der sortenreinen Lage (24) vereinzelt in einem der ausgewählten, parallelen Bänder (30₁, 30₂,..., 30_{N}) aufgenommen werden.

10. Verfahren nach einem der Ansprüche 8 bis 9, wobei die zugewiesenen Positionen (P) der unterschiedlichen Gebindetypen im Lagenbild (14) einer Lage (24) der Produktionspalette (12) entsprechend einem prozentualen Anteil der mindestens zwei Gebindetypen der Produktionspalette (12) verteilt werden.

## Claims

1. System (1) for creating mixed layers (24) for pallets (8₁, 8₂, 8₃, 8₄) with
a storage (10) for storing at least two different types of packages of the same size on several pallets (8₁, 8₂, 8₃, 8₄) of several layers (24) of homogenous packages (55),
a depalletizer (20) for lifting-off in each case a homogenous layer (24) from the homogenous pallet (8₁, 8₂, 8₃, 8₄), and
a grouping table (50) for grouping the packages (55),
several individual parallel belts (30₁, 30₂, ..., 30_{N}) for respectively receiving and storing the individual packages (55) of the homogenous layers (24) of a package type,
**characterized by**
a single supply belt (40) for the grouping table (50), which is arranged downstream from the parallel belts (30₁, 30₂, ..., 30_{N}),
a controller (60), associated with the depalletizer (20), the supply belt (40) and the grouping table (50), for supplying the at least two different package types as a function of predefined positions (P) of the different package types in a layer pattern (14) of a layer (24) of a production pallet (12) to the grouping table (50),
an input/output unit (62) of the controller (60) for obtaining a status information from the system (1) for an operator and for specifying the positioning of the different package types within the layer (24) of different packages (55),
at least one image processing device (70) for checking the individual packages (55) for damage, for belonging to the respective production order and/or for the sequential correctness of the transport as a function of the positions (P) of the different package types in the layer pattern (14) of the layer (24) of a production pallet (12),
at least one image processing device (70), which is associated with the depalletizer (20) for verifying the package types required for the order,
at least one image processing device (70), which is disposed in the region at which the individualized packages (55) of the homogenous layers (24) of a package type run into the individual belts (30₁, 30₂, ..., 30_{N}), and
at least one image processing device (70), which is associated with the supply belt (40) to the grouping table (50), for verifying the different package types conveyed from the several belts (30₁, 30₂, ..., 30_{N}) in accordance with the layer pattern (14) of a layer (24) of a production pallet (12),
wherein the grouping table (50) is configured so that it positions the packages (55) of different package types according to the predefined positions (P) of the different package types and of the layer pattern (14), so that the layer (24) forms a mixed layer (24).

2. System (1) according to claim 1, wherein a palletizer is arranged downstream of the grouping table (50), which palletizer deposits the mixed layer (24) of the at least two package types on the production pallet (12).

3. System (1) according to anyone of the preceding claims, wherein a layer pattern (14) is displayable on the input/output unit (62) for each of the plurality of layers (24) of a production pallet (12), and wherein an operator (5), taking into account a predefined mixing ratio of the individual package types of each package (55) of a type, assigns a position (P) in the respective layer pattern (14).

4. System (1) according to claim 3 further constructed so that, in the layer pattern (14) on the input/output unit (62), a graphical, numerical and/or alphanumerical mark appears on the different types of packages after an operator (5) has assigned the position (P) to the package (55) within the layer (24).

5. System (1) according to anyone of claims 3 to 4, wherein several registers (17) are shown on the input/output unit (62) for calling further information and action levels at the input/output unit (62), for starting an order for creating several production pallets (12) with layers (24) containing at least two different types of packages, for creating a new palletizing mode for a new order or for switching to a different order.

6. System (1) according to claim 5, wherein several switches (58) for the central intervention in the functioning of the system (1) are shown in at least one of the information and/or action levels of the input/output unit (62), wherein a switch (58) is associated with a function of the system (1) for creating mixed layers (24) for production pallets (12); or
wherein in one of the information and/or action levels, the input/output unit (62) displays production data (5) to the operator (5) regarding the creation of production pallets (12) with at least two different types of packages and the status of homogenous pallets (8₁, 8₂, 8₃, 8₄) of the at least two types of packages present in the system (1); or
wherein in one of the information and/or action levels, the input/output unit (62) passes on information to the operator (5) such as the distribution and/or the number of different types of packages in the system (1) for creating mixed layers (24) for production pallets (12) as well as a graphical overview of the pallets (8₁, 8₂, 8₃, 8₄) present in the production with one package type each; or
wherein in one of the information and/or action levels on the input/output unit (62), the operator (5) receives information about the pallets (8₁, 8₂, 8₃, 8₄) processed with a depalletizer (20) with homogenous packages (55); or
wherein in one of the information and/or action levels on the input/output unit (62), the operator (5) receives information about a transport of pallets (8₁, 8₂, 8₃, 8₄) in the system (1); or
wherein in one of the information and/or action levels on the input/output unit (62), the operator (5) receives information about a package transport of the different package types in the system (1); or
wherein in one of the information and/or action levels on the input/output unit (62), the operator (5) receives information about the loaded production pallets (12).

7. Method for creating mixed layers (24) for pallets (8₁, 8₂, 8₃, 8₄) for a system (1) according to one of the preceding claims pursuant to the following steps:
• assigning positions (P) of packages (55) of at least two different types of the same dimension within a layer pattern (14) of a production pallet (12);
• controlled out-transporting of the packages (55) from several parallel belts (30₁, 30₂, ..., 30_{N}) according to their assigned position (P) within the layer pattern (14) of the production pallet (12) on a single supply belt (40) for a grouping table (50), each belt (30₁, 30₂, ..., 30_{N}) containing only homogenous packages (55); and
• controlled sequential supplying of the packages (55) as a function of their assigned position (P) within the layer pattern (14) of the production pallet (12) to the grouping table (50) by means of which the layer (24) is assembled in accordance with the predefined layer pattern (14).

8. Method according to claim 7, wherein the entire layer (24) assembled on the grouping table (50) according to the predefined layer pattern (14) is deposited on the production pallet (12).

9. Method according to anyone of the claims 7 to 8, wherein several pallets (8₁, 8₂, 8₃, 8₄) are provided from several layers (24) of homogenous packages (55), a homogenous layer (24) is taken in each case from one of the several pallets (8₁, 8₂, 8₃, 8₄) and the packages (55) of the homogenous layer (24) are taken up separately in one of the selected, parallel belts (30₁, 30₂, ..., 30_{N}).

10. Method according to anyone of the claims 8 to 9, wherein the assigned positions (P) of the different types of packages in the layer pattern (14) of a layer (24) of the production pallet (12) are distributed according to a percentage of the at least two types of packages of the production pallet (12).

## Revendications

1. Système (1) pour l'assemblage de couches (24) mixtes de palettes (8₁, 8₂, 83, 84) comprenant
un entrepôt (10) pour le stockage d'au moins deux types d'emballages différents de même taille sur plusieurs palettes (8₁, 8₂, 8₃, 8₄) constituées de plusieurs couches (24) d'emballages (55) non mixtes,
un dépalettiseur (20) destiné à enlever respectivement une couche (24) non mixtee de la palette (8₁, 8₂, 8₃, 8₄) non mixtee, et
une table de groupement (50) destinée à grouper les emballages (55),
plusieurs bandes individuelles parallèles (30₁, 30₂, ..., 30_{N}) destinées à respectivement recevoir et stocker les emballages (55) séparés des couches (24) non mixtees d'un type d'emballage,
**caractérisé par**
un seul convoyeur d'amenée (40) pour la table de groupement (50) qui est monté en aval des bandes parallèles (30₁, 30₂, ..., 30_{N}),
une commande (60) associée au dépalettiseur (20), au convoyeur d'amenée (40) et à la table de groupement (50), destinée à amener les au moins deux types d'emballages différents à la table de groupement (50) comme une fonction de positions (P) prédéfinies des différents types d'emballages dans une configuration de couches (14) d'une couche (24) d'une palette de production (12),
une unité d'entrée/de sortie (62) de la commande (60) destinée à recevoir une information d'état du système (1) pour un opérateur et à prédéfinir le positionnement des différents types d'emballages dans la couche (24) constituée de différents emballages (55),
au moins un dispositif de traitement d'image (70) destiné à vérifier que les emballages (55) individuels ne sont pas endommagés, qu'ils font partie de la commande de production respective, et/ou que le transport est séquentiellement correct en fonction des positions (P) des différents types d'emballages dans la configuration de couches (14) de la couche (24) d'une palette de production (12),
au moins un dispositif de traitement d'image (70) associé au dépalettiseur (20), destiné à vérifier les types d'emballages nécessaires à la commande,
au moins un dispositif de traitement d'image (70) disposé dans la zone où les emballages (55) séparés des couches (24) non mixtees d'un type d'emballages passent dans les bandes (30₁, 30₂, ..., 30_{N}) individuelles, et
au moins un dispositif de traitement d'image (70) associé au convoyeur d'amenée (40) menant à la table de groupement (50), destiné à vérifier les différents types d'emballages transportés hors des plusieurs bandes (30₁, 30₂, ..., 30_{N}) selon la configuration de couches (14) d'une couche (24) d'une palette de production (12),
la table de groupement (50) étant configurée de telle manière qu'elle positionne les emballages (55) de différents types d'emballages sur la base des positions prédéfinies (P) des différents types d'emballages et de la configuration de couches (14) de telle manière que la couche (24) forme une couche (24) mixte.

2. Système (1) selon la revendication 1, dans lequel un palettiseur (50) qui pose la couche (24) mixte constituée des au moins deux types d'emballages sur la palette de production (12) est monté en aval de la table de groupement (50).

3. Système (1) selon l'une des revendications précédentes, dans lequel une configuration de couches (14) peut être représentée sur l'unité d'entrée/de sortie (62) pour chaque couche de la pluralité des couches (24) d'une palette de production (12), un opérateur (5) attribuant une position (P) dans la configuration de couches (14) respective en tenant compte d'une proportion de mélange prédéfinie des types d'emballages individuels de chaque emballage (55) d'un type.

4. Système (1) selon la revendication 3 qui est configuré en outre de telle manière qu'un repère graphique, numérique et/ou alphanumérique apparaît sur les différents types d'emballages dans la configuration de couches (14) sur l'unité d'entrée/de sortie (62) après qu'un opérateur (5) ait attribué la position (P) à l'emballage (55) dans la couche (24).

5. Système (1) selon l'une des revendications 3 et 4, dans lequel plusieurs registres (17) sont représentés sur l'unité d'entrée/de sortie (62) pour appeler d'autres plans d'information et d'action sur l'unité d'entrée/de sortie (62), pour lancer une commande afin d'assembler plusieurs palettes de production (12) ayant des couches (24) qui contiennent au moins deux types d'emballages différents, pour établir un nouveau mode de palettisation pour une nouvelle commande, ou pour passer à une autre commande.

6. Système (1) selon la revendication 5, dans lequel plusieurs commutateurs (58) destinés à intervenir centralement dans le fonctionnement du système (1) sont représentés sur au moins l'un des plans d'information et/ou d'action de l'unité d'entrée/de sortie (62), respectivement un commutateur (58) étant associé à une fonction du système (1) pour l'assemblage de couches (24) mixtes de palettes de production (12); ou
dans lequel, sur l'un des plans d'information et/ou d'action, l'unité d'entrée/de sortie (62) représente des données de production concernant l'assemblage de palettes de production (12) ayant au moins deux types d'emballages différents et le statut des palettes (8₁, 8₂, 8₃, 8₄) non mixtees des au moins deux types d'emballages présentes dans le système (1) à l'opérateur (5); ou
dans lequel, sur l'un des plans d'information et/ou d'action, l'unité d'entrée/de sortie (62) transmet des informations à l'opérateur (5) sur la manière de la distribution et/ou du nombre de différents types d'emballages dans le système (1) pour l'assemblage de couches (24) mixtes de palettes de production (12), et lui transmet en outre un tableau synoptique graphique des palettes (8₁, 8₂, 8₃, 8₄) ayant au moins un type d'emballages présentes dans la production; ou
dans lequel, sur l'un des plans d'information et/ou d'action sur l'unité d'entrée/de sortie (62), l'opérateur (5) reçoit des informations sur les palettes (8₁, 8₂, 8₃, 8₄) ayant des emballages non mixtes (55) traitées par un dépalettiseur (20), ou
dans lequel, sur l'un des plans d'information et/ou d'action sur l'unité d'entrée/de sortie (62), l'opérateur (5) reçoit des informations sur un transport de palettes (8₁, 8₂, 8₃, 8₄) dans le système (1); ou
dans lequel, sur l'un des plans d'information et/ou d'action sur l'unité d'entrée/de sortie (62), l'opérateur (5) reçoit des informations sur un transport d'emballages des différents types d'emballages dans le système (1); ou
dans lequel, sur l'un des plans d'information et/ou d'action sur l'unité d'entrée/de sortie (62), l'opérateur (5) reçoit des informations sur les palettes de production (12) chargées.

7. Procédé pour l'assemblage de couches (24) mixtes de palettes (8₁, 8₂, 8₃, 8₄) pour un système (1) selon l'une des revendications précédentes, comprenant les étapes suivantes:
• attribuer des positions (P) d'emballages (55) d'au moins deux types d'emballages différents de même dimension dans une configuration de couches (14) d'une palette de production (12);
• transporter de manière commandée les emballages (55) hors de plusieurs bandes (30₁, 30₂, ..., 30_{N}) parallèles sur un seul convoyeur d'amenée (40) pour une table de groupement (50) selon leur position attribuée (P) dans la configuration de couches (14) de la palette de production (12), chaque bande (30₁, 30₂, ..., 30_{N}), chaque bande (30₁, 30₂, ..., 30_{N}) contenant exclusivement des emballages (55) non mixtes; et
• amener séquentiellement et de manière commandée les emballages (55) en fonction de leur position attribuée (P) dans la configuration de couches (14) de la palette de production (12) à la table de groupement (50) par laquelle est composée la couche (24) selon la configuration de couches (14) prédéfinie.

8. Procédé selon la revendication 7, dans lequel la couche (24) entière composée sur la table de groupement (50) selon la configuration de couches (14) prédéfinie est posée sur la palette de production (12).

9. Procédé selon l'une des revendications 7 et 8, dans lequel plusieurs palettes (8₁, 8₂, 8₃, 8₄) constituées de plusieurs couches (24) d'emballages (55) non mixtes sont prévues, une couche (24) non mixtee étant retirée d'une palette des plusieurs palettes (8₁, 8₂, 8₃, 8₄), respectivement, et les emballages (55) de la couche (24) non mixtee étant reçus séparément dans l'une des bandes (30₁, 30₂, ..., 30_{N}) parallèles sélectionnées.

10. Procédé selon l'une des revendications 8 et 9, dans lequel les positions (P) attribuées des différents types d'emballages dans la configuration de couches (14) d'une couche (24) de la palette de production (12) sont distribuées selon un pourcentage des au moins deux types d'emballages de la palette de production (12).
